# EUROPEAN PATENT APPLICATION

(11) **EP 4 480 814 A1**
(43) Date of publication of application: **25.12.2024**
(21) Application number: 24180275.0
(22) Date of filing: 05.06.2024
(51) Int. Cl.: B64C 11/50, B64U 20/20, B64U 50/19, B64C 11/48, B64D 27/30

(54) **METHOD TO DECREASE ACOUSTIC SIGNATURE OF A HYBRID ELECTRIC PROPULSION SYSTEM**

(30) Priority: 23.06.2023 US 202318340341
(71) Applicant: RTX Corporation, Farmington, CT 06032 (US)
(72) Inventor: AMARI, Martin, Farmington, 06032 (US); WILHIDE, Matthew L., Farmington, 06032 (US); IVES, Kyle, Farmington, 06032 (US)
(74) Representative: Dehns

(57) **Abstract**

A propulsion system includes a propulsion unit (24) including a multi-stage fan having a first fan stage (60) including a first rotor and a second fan stage (62) including a second rotor. At least one propulsion motor (22) is operably coupled to the first rotor and to the second rotor to drive the first rotor and the second rotor about a fan axis (X). A controller (102) is configured to determine a position of at least one of the first rotor and the second rotor in response to an electrical signature of the at least one propulsion motor (22) and adjust one or more operating parameters of at least one of the first rotor and the second rotor to reduce a noise produced by rotation of the first rotor and the noise produced by rotation of the second rotor in combination.

## Description

### TECHNICAL FIELD

Exemplary embodiments of the present invention pertain to aircraft and, more particularly, to a system and method for reducing the noise generated by a propulsion unit of an aircraft.

### BACKGROUND

Hybrid and electric aircraft propulsion technologies have the capability to reduce fossil fuel use, CO₂ emissions, operating costs and noise footprint compared to conventional aircraft. The noise generated by the propulsion units of such an aircraft can be problematic. Accordingly, the noise generated by a propulsion unit and experienced on the ground or on board the aircraft may be required to be managed, irrespective of how the propulsion unit is powered.

### BRIEF DESCRIPTION

According to an aspect of the present invention, a propulsion system includes a propulsion unit including a multi-stage fan having a first fan stage including a first rotor and a second fan stage including a second rotor. At least one propulsion motor is operably coupled to the first rotor and to the second rotor to drive the first rotor and the second rotor about a fan axis. A controller is configured to determine a position of at least one of the first rotor and the second rotor in response to an electrical signature of the at least one propulsion motor and adjust one or more operating parameters of at least one of the first rotor and the second rotor to reduce a noise produced by rotation of the first rotor and the noise produced by rotation of the second rotor in combination.

In an embodiment of the above, the controller is further configured to determine the noise produced by at least one of the first rotor and the second rotor.

In an embodiment according to any of the previous embodiments, the noise produced by at least one of the first rotor and the second rotor is determined in response to the position of at least one of the first rotor and the second rotor.

In an embodiment according to any of the previous embodiments, the controller is further configured to receive a signal from a sensor indicating the noise produced by at least one of the first rotor and the second rotor.

In an embodiment according to any of the previous embodiments, the controller is configured to determine a relative position of the first rotor and the second rotor in response to the electrical signature of the at least one propulsion motor.

In an embodiment according to any of the previous embodiments, the one or more operating parameters of at least one of the first rotor and the second rotor is phase.

In an embodiment according to any of the previous embodiments, the one or more operating parameters of at least one of the first rotor and the second rotor is rotational speed.

In an embodiment according to any of the previous embodiments, the propulsion unit is an electric fan.

In an embodiment according to any of the previous embodiments, the propulsion unit is mounted to an aircraft.

According to another aspect of the present invention, a method for reducing noise of a propulsion system includes determining a position of at least one rotor of a propulsion unit, the at least one rotor being driven about an axis by at least one propulsion motor in response to an electrical signature of the at least one propulsion motor. Upon determining the position of the at least one rotor, one or more operating parameters of the at least one rotor are adjusted to reduce a noise produced by the propulsion unit.

In an embodiment of the above, the method further comprises determining the noise produced by the at least one rotor.

In an embodiment according to any of the previous embodiments, the noise produced by the at least one rotor is determined in response to the position of at least one rotor.

In an embodiment according to any of the previous embodiments, the method further comprises sensing the noise produced by the at least one rotor via a sensor.

In an embodiment according to any of the previous embodiments, the at least one rotor includes a first rotor and a second rotor and determining the position of the at least one rotor includes determining a relative position of the first rotor and the second rotor.

In an embodiment according to any of the previous embodiments, the adjusting one or more operating parameters of at least one rotor is performed to lessen the noise generated by one of the first rotor and the second rotor.

In an embodiment according to any of the previous embodiments, the adjusting one or more operating parameters of at least one rotor includes controlling one or more operating parameters of the second rotor to actively cancel the noise generated by the first rotor.

In an embodiment according to any of the previous embodiments, the adjusting one or more operating parameters of at least one rotor includes adjusting a phase of the at least one rotor.

In an embodiment according to any of the previous embodiments, the adjusting one or more operating parameters of at least one rotor includes adjusting a rotational speed of the at least one rotor.

In an embodiment according to any of the previous embodiments, the propulsion unit is mounted to an aircraft.

According to another aspect of the present invention, an aircraft includes a fuselage and a propulsion unit mounted to the fuselage. The propulsion unit includes a first fan stage having a first rotor and a second fan stage having a second rotor. The first rotor and the second rotor are rotatable about a fan axis by at least one propulsion motor. A controller is configured to determine a position of at least one of the first rotor and the second rotor in response to an electrical signature of the at least one propulsion motor and adjust one or more operating parameters of at least one of the first rotor and the second rotor to reduce a noise produced by rotation of the first rotor and the noise produced by rotation of the second rotor in combination.

### BRIEF DESCRIPTION OF THE DRAWINGS

The following descriptions should not be considered limiting in any way. With reference to the accompanying drawings, like elements are numbered alike:
FIG. 1 is a schematic illustration of a series hybrid propulsion system of an aircraft according to an embodiment;
FIG. 2 is a schematic cross-sectional view of a propulsion unit according to an embodiment; and
FIG. 3 is a control system operably coupled to one or more propulsion units within a series hybrid propulsion system according to an embodiment.

### DETAILED DESCRIPTION

A detailed description of one or more embodiments of the disclosed apparatus and method are presented herein by way of exemplification and not limitation with reference to the Figures.

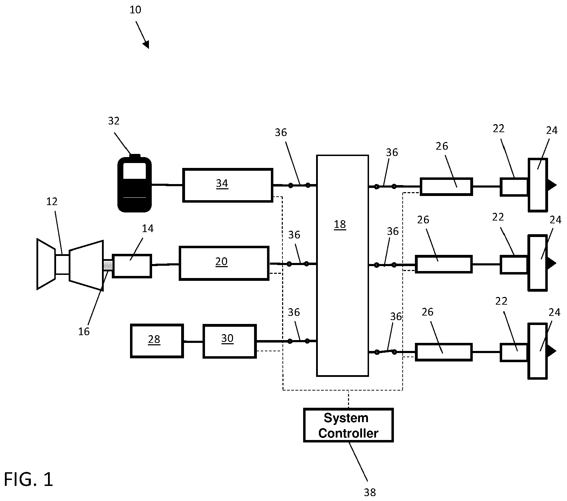

Referring to FIG. 1, an embodiment of a series hybrid propulsion system 10 of an aircraft is illustrated. The system 10 includes a gas turbine engine 12 that is operably connected to an electrical generator 14. The operation of the gas turbine engine 12 drives the generator 14, which is operably connected to the gas turbine engine 12 via, for example, an output shaft 16. The operation of the generator 14 provides electrical power for the system 10. In some embodiments, the generator 14 is a permanent magnet generator 14, in which the output voltage of the generator 14 is proportional to the input speed from the output shaft 16 into the generator 14. In other embodiments, the generator 14 is a wound field synchronous machine with machine output voltage controlled by a Generator Control Unit (GCU). In at least one example, the generator 14 includes a motor-generator 14 configured to generate power and/or drive a spool of the gas turbine engine 12.

The generator 14 is connected to a power grid 18 of the aircraft, which may be an alternating current (AC) power grid 18 or a direct current (DC) power grid 18. For DC systems, the generator 14 is connected to the power grid 18 via a generator voltage regulator 20, which in some embodiments may also include a voltage convertor, such as an active rectifier, to convert the voltage output from the generator 14. The system 10 includes at least one propulsion motor 22 connected to the power grid 18, which are driven by electrical power generated by the generator 14. The propulsion motors 22 are each connected to a propulsion unit 24, for example a fan, to provide a propulsive force for the aircraft. Additionally, each propulsion motor 22 may be configured to generate power to feed to the power grid 18, such as when the propulsion unit 24 windmills. In the illustrated embodiment, three propulsion motor 22 / propulsion unit 24 combinations are included, but one skilled in the art will readily appreciate that other quantities of motor 22 / propulsion unit 24 combinations, such as two, four, or more combinations, may be utilized. Operation of the propulsion motors 22 may be managed by a motor control 26 operably connected to the power grid 18 and the respective propulsion motor 22.

In addition to the propulsion motors 22, other aircraft systems 28 may be connected to the power grid 18, such as cabin environmental control systems, lighting, and other systems. A power conversion device 30 may be used to interface these other systems to the power grid 18. Additionally, in some embodiments, an energy storage system, such as one or more batteries 32 and a battery voltage regulator 34 are also connected to the power grid 18 to store excess power generated by the generator 14 and distribute electrical power from the one or more batteries 32 to the power grid 18 and the motors 22 and/or additional aircraft systems 28. Each of the generator 14, the batteries 32, the aircraft systems 28, and the propulsion motors 22 are switchably connectible and disconnectable from the power grid 18 via a plurality of switches 36, which may be operated by a system controller 38. It should be appreciated that the hybrid propulsion system illustrated and described herein is intended as an example only.

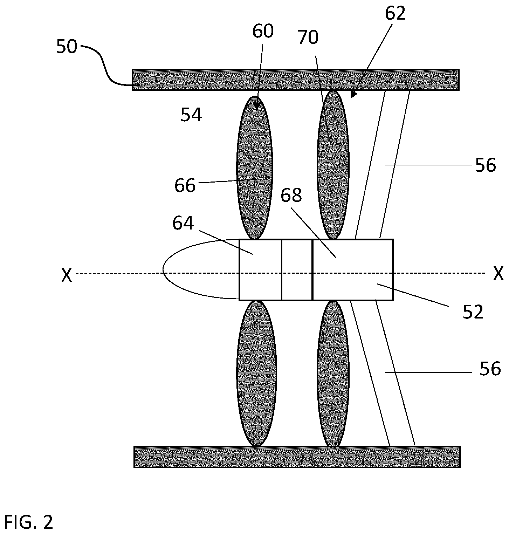

An example of a propulsion unit 24 drivable by a propulsion motor 22 as described herein is illustrated in more detail in FIG. 2. As shown, the propulsion unit 24 may include an outer casing 50, a core or inner casing 52, and a duct 54 defined therebetween. The outer casing 50 may be attached to the inner casing 52 via one or more struts 56. For example, a plurality of struts 56 may be generally equidistantly spaced about a periphery of the inner casing 52. The propulsion unit 24 includes a fan mounted to the inner casing 52 for rotation about an axis. Although the fan is illustrated as being arranged upstream from the struts 56 relative to a flow of air through the propulsion unit 24, it should be appreciated that embodiments where the struts are alternatively or additionally located upstream from the propulsion unit are within the scope of the disclosure.

In the non-limiting embodiment shown in FIG. 2, the fan is a multi-stage fan, such as having a dual stage configuration including a first fan stage and a second fan stage for example. However, embodiments where the fan has only a single stage or has more than two stages are also within the scope of the disclosure. The second fan stage is located downstream from the first fan stage 60 when the propulsion unit 24 is operated to provide thrust. The first fan stage 60 and the second fan stage 62 may both be coupled to the same rotatable shaft, such as mounted within the interior of the inner casing for example. In such embodiments, the plurality of fan stages 60, 62 may be driven about an axis X by a common propulsion motor 22, such as an electrical machine for example. However, embodiments where the fan stages 60, 62 are driven independently, and controlled by separate propulsion motors 22 are also within the scope of the disclosure. In an embodiment, the one or more propulsion motors 22 may be mounted at or within the outer casing 50. Accordingly, it should be appreciated that the plurality of fan stages 60, 62 within a propulsion unit 24 may rotate in the same direction or in different directions and/or at the same rotational speed or at different rotational speeds depending on operating conditions.

Each fan stage 60, 62 includes at least one rotor having a hub and a plurality of fan blades extending radially therefrom. For example, the first fan stage 60 includes a first rotor having a first hub 64 and a plurality of first fan blades 66 and the second fan stage 62 includes a second rotor having a second hub 68 and a plurality of second fan blades 70. In embodiments where a single propulsion unit 24 includes multiple fan stages, the configuration of the fan rotors may be the same or may be different. For example, the number of fan blades 66, 70 of each fan rotor may but need not be the same. Alternatively, or in addition, one or more parameters of the fan blades 66, 70 themselves, such as a shape, diameter, or sweep for example, may vary between the plurality of fans rotors. It should be appreciated that the propulsion unit 24 illustrated and described herein is intended as an example only and that any suitable mechanism having a propeller, fan, rotor, or other suitable member rotatable to generate thrust, such as a propeller, turbofan, or electric fan for example, is within the scope of the disclosure.

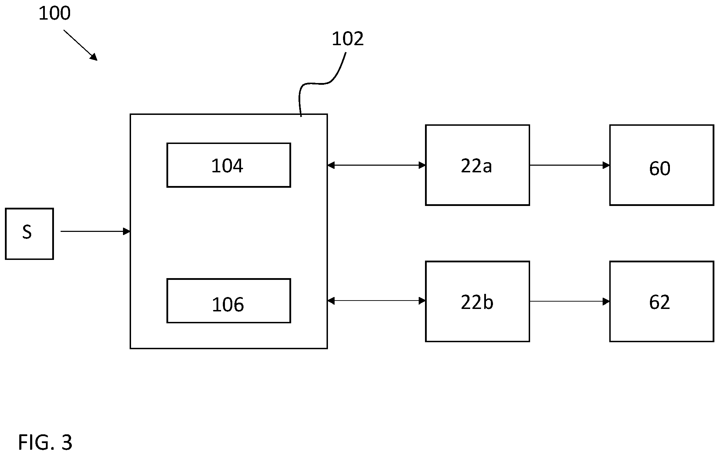

With reference to FIG. 3, a control system 100 for operating a propulsion unit 24 is illustrated in more detail. As shown, the fan rotor of each stage may be operably coupled to a separate propulsion motor 22. A control system 100, such as including a controller 102 having a processor for example, is operably coupled to one or more propulsion motors 22a, 22b and is configured to send one or more commands thereto and control one or more operating parameters of a respective fan rotor.

During operation of a propulsion unit 24, rotation of the fan rotors of the one or more fan stages 60, 62 about the fan axis X produces a wake within the air flow. Interaction of this wake with one or more of the struts 56 can generate noise. Such a fan-strut interaction can significantly contribute to the perceived noise level of the propulsion unit 24. In embodiments including multiple fan stages, the fan-strut interaction of each of the fan stages 60, 62 may be compounded, such as when fan blades from multiple fan stages overlap at a strut 56 or pass a strut simultaneously.

The controller 102 may be operable to determine a noise generated by the fan rotor of each fan stage 60, 62. In an embodiment, the control system 100 includes one or more sensors S, such as audio sensors for example, operable to detect or measure a noise level and communicate a signal indicating the detected noise level to the controller 102. In such embodiments, the control system 100 may include one or more sensors S, such as positioned adjacent to a strut 56 for example, to monitor the overall noise generated by the fan of the propulsion unit 24. Alternatively, or in addition, the control system 100 may include at least one sensor S positioned about the fan, such as at the fan blades 66, 70 for example, to detect the noise generated by the fan rotor of each fan stage 60, 62, respectively. It should be appreciated that the positions of the one or more sensors S as described herein are intended as an example only and that a sensor located at any other suitable location is within the scope of the disclosure. In other embodiments, the controller 102 may be configured to learn a distortion of the fan blades associated with different operational parameters and the corresponding impact on the noise or acoustic signature of the fan rotor.

In some embodiments, the controller 102 may include a noise estimation module or may be operable to execute a noise estimation algorithm, illustrated, schematically at 104, to estimate the noise generated by a fan rotor of a respective fan stage 60, 62, such as based on one or more operational parameters of the fan rotor. In an embodiment, the noise estimation module or algorithm 104, referred to collectively as the noise estimation module 104 herein, may be configured to use a position or phase of the fan rotor to evaluate the noise generated thereby.

To establish the position or phase, an electrical signature is communicated to the controller 102 from the one or more propulsion motors 22. The electrical signature may include the phase of the voltage and/or the current provided to a propulsion motor 22 for example, as monitored in real time. In an embodiment, the electrical signature may be based on an encoder that provides actual rotational speed and/or actual rotational position. Using the electrical signature, the controller 102 may determine a position of at least one rotor, and therefore of the fan blades 66, 70 of the fan rotors, operably coupled to each propulsion motor 22. This position of the rotors and/or the fan blades 66, 70 of the fan rotors may then be provided as an input to the noise estimation module 104. Alternatively, or in addition, the controller 102 may be configured to estimate a rotational speed of a propulsion motor 22 and therefore of the corresponding fan rotor based on an electrical signature and provide this rotational speed as an input to the noise estimation module 104.

In an embodiment, the noise estimation module 104 uses the positional information of a fan rotor in combination with one or more additional operational parameters, such as frequency and/or rotational speed of the fan rotor for example, to approximate the noise generated by the fan rotor of each fan stage 60, 62. In other embodiments, the noise estimation module 104 may access a stored table or database that indicates an approximate noise generated based on one or more operational parameters of a fan rotor, such as position and/or rotational speed for example.

The controller 102 may additionally include a noise mitigating module or algorithm 106, referred to herein as a noise mitigating module, operable to control at least one fan stage 60, 62 of a propulsion unit 24 to mitigate or reduce the noise generated by the propulsion unit 24. For example, in response to the learned or sensed noise and/or the operational or noise information output from the noise estimation module 104, the noise mitigating module 106 may alter one or more operational parameters of the propulsion unit 24. Examples of the parameters that may be controlled included to reduce the noise generated by a fan rotor include, but are not limited to modulation, phase, and/or rotational speed of a fan rotor.

In an embodiment, one or more commands output from the noise mitigation module 106 and communicated to the propulsion unit 24 by the controller 102 are intended simply to reduce the noise generated by a respective fan rotor of the propulsion unit 24. Each fan stage 60, 62 of a propulsion unit 24 may be individually phase-controlled by the controller 102. Phase control may be implemented selectively, via transmission of a set of control signals, to reduce the impact of the noise generated from operation of the fan stages 60, 62, and from the air flow about one or more structural supports or struts 56 resulting from operation of the propulsion unit 24. For example, if the noise estimation module 104 determines that a fan blade 66 of the first rotor and a fan blade 70 of the second rotor overlap at a strut 56 as a result of the relative position of the first and second fan rotors, the controller 102 may adjust the phase or angular position between the first rotor and the second rotor to prevent such an overlap from occurring.

In some embodiments, adjusting one or more operating parameters of at least one rotor of the one or more fan stages is actively performed to destructively interfere with the noise generated by another fan stage, resulting in noise cancellation. For example, the noise mitigation module 106 may modulate the rotational speed of the fan rotor of the second fan stage 62 such that the second fan rotor, while rotating at the modulated speed, produces anti-noise that destructively interferes with and cancels or substantially cancels the noise generated by rotation of the fan rotor of the first fan stage 60. The anti-noise generated by at least one fan stage may include sound waves that have approximately the same frequency and/or amplitude as the noise sound waves generated by another fan stage. However, the phase of the anti-noise sound waves may be different than the phase of the noise sound waves.

Although the noise mitigating module is illustrated and described herein with respect to reducing the noise generated by a propulsion unit 24, it should be appreciated that the noise mitigating module may alternatively or additionally be configured to reduce the noise generated by a group of propulsion units 24, such as all or only a portion of the propulsion units 24 of a vehicle.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A propulsion system comprising:
a propulsion unit (24), including a multi-stage fan having a first fan stage (60) including a first rotor and a second fan stage (62) including a second rotor;
at least one propulsion motor (22) operably coupled to the first rotor and the second rotor to drive the first rotor and the second rotor about a fan axis (X);
a controller (102) configured to:
determine a position of the first rotor and/or the second rotor in response to an electrical signature of the at least one propulsion motor (22); and
adjust one or more operating parameters of the first rotor and/or the second rotor to reduce a noise produced by rotation of the first rotor and the noise produced by rotation of the second rotor in combination.

2. The propulsion system of claim 1, wherein the controller (102) is further configured to determine the noise produced by the first rotor and/or the second rotor, optionally wherein the noise produced by the first rotor and/or the second rotor is determined in response to the position of the first rotor and/or the second rotor.

3. The propulsion system of claim 1 or 2, wherein the controller (102) is further configured to receive a signal from a sensor (S) indicating the noise produced by the first rotor and/or the second rotor.

4. The propulsion system of any preceding claim, wherein the controller (102) is configured to determine a relative position of the first rotor and the second rotor in response to the electrical signature of the at least one propulsion motor (22).

5. The propulsion system of any preceding claim, wherein the one or more operating parameters of the first rotor and/or the second rotor is phase.

6. The propulsion system of any preceding claim, wherein the one or more operating parameters of the first rotor and/or the second rotor is rotational speed.

7. The propulsion system of any preceding claim, wherein the propulsion unit (24) is an electric fan.

8. The propulsion system of any preceding claim, wherein the propulsion unit (24) is mounted to an aircraft.

9. A method for reducing noise of a propulsion system comprising:
determining a position of at least one rotor of a propulsion unit (24), the at least one rotor being driven about an axis (X) by at least one propulsion motor (22) in response to an electrical signature of the at least one propulsion motor (22); and
upon determining the position of the at least one rotor, adjusting one or more operating parameters of the at least one rotor to reduce a noise produced by the propulsion unit (24).

10. The method of claim 9, further comprising determining the noise produced by the at least one rotor, optionally wherein the noise produced by the at least one rotor is determined in response to the position of at least one rotor.

11. The method of claim 9 or 10, further comprising sensing the noise produced by the at least one rotor via a sensor (S).

12. The method of any of claims 9 to 11, wherein the at least one rotor further comprises a first rotor and a second rotor and determining the position of the at least one rotor further comprises determining a relative position of the first rotor and the second rotor, optionally wherein:
the adjusting one or more operating parameters of at least one rotor is performed to lessen the noise generated by one of the first rotor and the second rotor; and/or
the adjusting one or more operating parameters of at least one rotor includes controlling one or more operating parameters of the second rotor to actively cancel the noise generated by the first rotor.

13. The method of any of claims 9 to 12, wherein the adjusting one or more operating parameters of at least one rotor includes:
adjusting a phase of the at least one rotor; and/or
adjusting a rotational speed of the at least one rotor.

14. The method of any of claims 9 to 13, wherein the propulsion unit (24) is mounted to an aircraft.

15. An aircraft comprising:
a fuselage;
a propulsion unit (24) mounted to the fuselage, the propulsion unit (24) including a first fan stage (60) including a first rotor and a second fan stage (62) including a second rotor, the first rotor and the second rotor being rotatable about a fan axis (X) by at least one propulsion motor (22); and
a controller (102) configured to:
determine a position of the first rotor and/or the second rotor in response to an electrical signature of the at least one propulsion motor (22); and
adjust one or more operating parameters of the first rotor and/or the second rotor to reduce a noise produced by rotation of the first rotor and the noise produced by rotation of the second rotor in combination.
